# EUROPEAN PATENT SPECIFICATION

(11) **EP 0 813 743 B1**
(45) Date of publication and mention of the grant of the patent: **11.08.1999**
(21) Application number: 96902833.1
(22) Date of filing: 26.02.1996
(51) Int. Cl.: H01H 13/70, G06F 3/02

(54) **THIN ELECTRONIC DATA INPUT DEVICE**
DÜNNES ELEKTRONISCHES DATENEINGABEGERÄT
DISPOSITIF D'ENTREE DE DONNEES ELECTRONIQUE EXTRAPLAT

(30) Priority: 02.03.1995 CA 2143770
(43) Date of publication of application: 29.12.1997
(73) Proprietor: Amiri, Ahmad, Cheadle Hulme, Cheshire SK8 5PY (GB)
(72) Inventor: Amiri, Ahmad, Cheadle Hulme, Cheshire SK8 5PY (GB)
(86) International application number: CA9600111
(87) International publication number: WO9627203

(56) References cited:
- WO-A-92/15083
- WO-A-93/15518
- DE-A- 2 932 540
- GB-A- 2 279 617
- US-A- 4 218 603
- US-A- 4 640 994
- US-A- 5 220 521

## Description

The present invention relates to a thin electronic data input device according to the preamble of claim 1 as known from DE-A-2 932 540 and to a method of using this device.

Prior art (existing keyboards or their conventional variations) comprise of an electronic circuit board, underneath a set of Alphanumeric keys kept apart from the circuit board by a spring or similar device, such that pressing a key down will cause the electronic contact that will eventually translate into input data.

One disadvantage of Prior art is that such keyboards have to accommodate the board plus the separating device (spring) plus the keys, and therefore are relatively thick. It is not easy to substantially reduce thickness.

Another disadvantage of Prior art is that to reduce its width and length, each key should become smaller and distances between keys should be reduced. Therefore shrinking it to small or pocket size dimensions sacrifices convenience and speed of operation, especially for operators with large fingers and hands. In fact beyond some point, it becomes impossible to operate. Another disadvantage of Prior art is that the board, the keys, the separating devices must be housed in a box and preferably have a lid protecting the keys, resulting in heavier weight. Another disadvantage of Prior Art is that keys can be stuck to adjacent keys and either have restricted movement or that pressing a key can cause adjacent keys to be pressed too. Another disadvantage of the prior art is that , spilled drinks or even solid particles can penetrate from the gap between keys to the board circuit and disrupt the circuiting and/or glue the keys together.

Another disadvantage of Prior art is that the spring mechanism underneath each key can become less responsive and lose its rebounding property.

Another disadvantage of Prior art is its noise of operation, such that for example using it in a quiet library, or in a shared bedroom is not desirable.

Another disadvantage of Prior art is that it is not easy to clean the keys, especially visible faces on and between keys, that do get dirty, especially in dirty environment.

Another disadvantage of Prior art is that because the keys have to be light and easy to press, they should not be firm and bulky and therefore are vulnerable to breakage, such that a keyboard can't be trusted to withstand pressures causing breakage. In other words, for transportation and use, it better be treated as "fragile", which is not very convenient considering their extensive daily use.

Another disadvantage of Prior art is that time required for data entry is not only the time required for finger to touch the key but the time for each key to travel the distance to the circuit board , plus often the time for the operator to feel the key's rebound before next key is pressed, reducing speed. Some of the above disadvantages do not apply to a special kind of keyboard currently used in fast food order entry and on some hand held calculators,where the circuit board is separated from the keys by a bubble gap closed by pressing the keys surface, such surface being of material with spring like properties that keeps key surface and circuit board separate (unless pressure is applied to the key surface). The problem with this kind is that the pressure needed to cause contact between keys and the circuit board is relatively "high" making data entry very slow and laborious .

There are other methods of data entry that when advanced and perfected may reduce the need for keyboards in the future, such as "voice recognition" and "handwriting recognition". Both above methods are by nature much slower than "finger operated data entry" as it is not possible to speak clearly or hand-write legibly as fast as moderate speeds attained by finger typing. Besides, such mechanisms cannot be used by people with impaired speaking or writing.

It is desirable to have a finger operated data entry device that has the following properties:
- It can be operated by touching, usually by finger, so that not only higher speeds attained by finger touch inputting can be attained, (as compared to voice or handwritten entry) but can be used by people with speech or writing impairment;
- Each letter, figure, or other unit of data, hereafter called "symbol" can be represented by a large enough touch surface or "node" for easy operation;
- All the symbols can be laid-out on a surface large enough for easy operation;
- Yet the device can be small, thus light and sturdy,pocket portable;
- It does not have any or many of the disadvantages of the Prior art listed above .

The present invention consists of a "Thin Electronic Data Input Device" ,that throughout this disclosure we abbreviate to "TEDID",some version of which may be "Foldable,Unfoldable" ,some versions capable of being "Rolled" up,some versions capable of being disintegrated into smaller Sub TEDIDs,and even some versions having one or more of such properties.

In one version of the invention, it comprises a "Thin board ",made of a material on which an electronic circuit can be imposed or printed , on which a data entry electronic circuit board (similar to a conventional keyboard electronic circuit ) is imposed , placed or printed.The electronic circuit will have "symbol nodes" ,being locations on the circuit that when touched by finger,send a signal, unique to that symbol node to the receiving processor or a computer.

One standard way of achieving this is that the circuit is broken at symbol nodes by a narrow "Gap" such that if the Gap is closed at that location, it will signal entry of particular symbol (letter, figure, etc.) to the receiver of data (usually but not necessarily a computer).Gap closure at "symbol nodes" are caused by the operators "finger", touching the "Gap" and the circuit on both sides of the Gap, that would bridge the Gap at" Symbol node" . As the human body conducts some electricity, bridging the "Gap" by finger will cause some electronic flow which signals the particular "symbol node" whose "Gap" has been touched. In essence, the operators finger does what the pressed key in a conventional keyboard does.

In circumstances, where the human finger does not provide sufficient conductivity to connect the Symbol node Gap, special conductive "finger cup"s can be worn by the operator.

In another version of the invention, the TEDID can be in one piece or comprising of two or more "Sub TEDIDs" connected together by "Flexible Joints" along the "longitudinal" sides between Sub TEDIDs, such that the "TEDID Assembly" may fold "longitudinally". Similarly the Board can comprise of two or more Sub TEDIDs that may fold on each other "Latitudinally". The TEDID may even be comprising of Sub TEDIDs that can fold longitudinally and latitudinally. One typical version may comprise of Sub TEDIDs folding longitudinally within each "Row" and latitudinally along the side of extreme Sub TEDID in each "Row" .

The electronic circuits will continue from Sub TEDID to Sub TEDID via "flexible cables" connected between preferably same sides of Sub TEDIDs to which Flexible Joints are connected,or even serving as flexible joints. All this gives the effect of folding the TEDID assembly to smaller width and length to fit into pocket or for increased versatility ,which can be unfolded for operation . One typical application is a version with full size Symbol set TEDID, comprising of equal Sub TEDIDs, in 3 rows of 4 Sub TEDIDs in each row. The top and bottom rows each folding 4 fold, onto the extreme TEDID , and then the extreme Sub TEDIDs of each row folding latitudinally along the joint side, hence providing a 12 fold which easily fits into pocket. The electronic circuitry may be covered by a thin layer of protective film, leaving only the symbol nodes exposed.

The invention is better illustrated with reference to drawings in which:

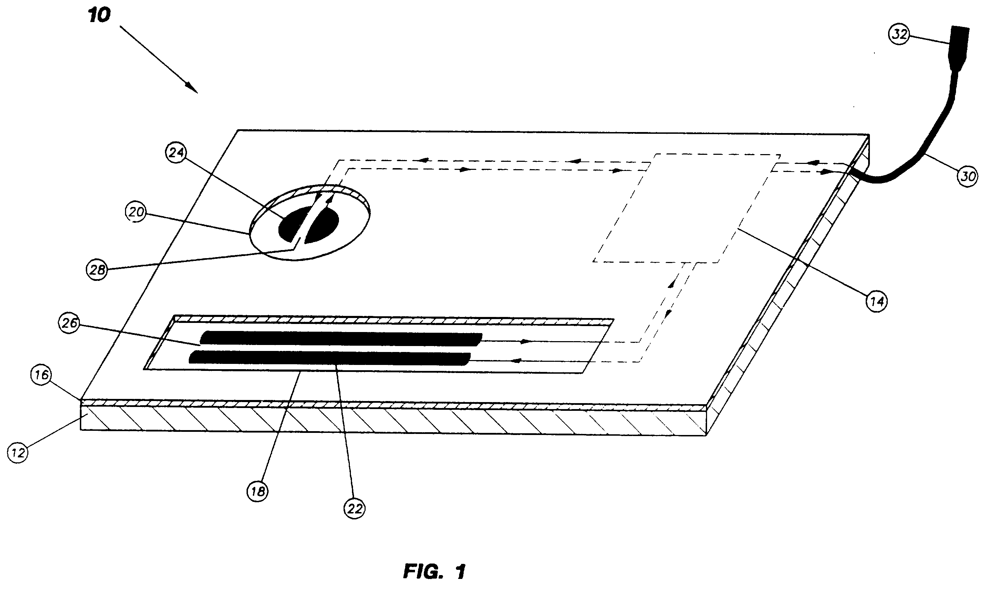

Figure 1 is a perspective view of an embodiment of a simple one piece TEDID .

Figure 2 is a foldable TEDID as an assembly of 12 Sub TEDIDs

Referring to the drawings, a simple TEDID 10 comprises of a thin board 12 on which electronic data entry circuitry 14 is printed, and covered by a thin non-electro conducting protecting layer 16, which layer have openings 18, 20 exposing Symbol nodes 22,24 and the Gaps 26,28.When a finger is placed over both halves of the Symbol node bridging the Gap, electronic current flows through the circuitry which signals the touched symbol, eventually transmitted to the computer or other receiving device via connection cord 30 and plug 32.

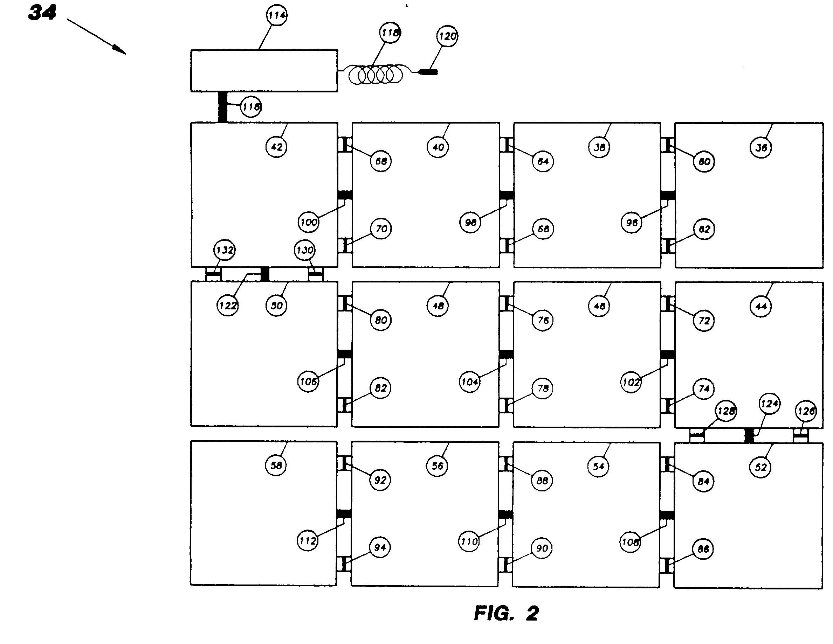

Figure 2 illustrates a typical assembly of twelve Sub TEDIDs making the TEDID 34, each one of Sub TEDIDs 36,38,40,42,44,46,48,50,52,54,56,58 connected to adjacent Sub TEDID orSub TEDIDs by Flexible Joints 60,62,64,66,68,70,72,74,76,78,80,82,84,86,88, 90, 92 ,94, 126, 128, 130, 132. Each Sub TEDID electronic circuitry continues to the adjacent circuitry via "flexible cable" sets 96,98,100, 102, 104, 106,108, 110, 112, 122, 124. The thicker elements of the electric circuit are all housed in the external "detachable chip" 114 which is connected to the rest of the assembly via the deplugable set of flexible cables 116 , and the TEDID assembly's electronic circuitry is connectable to the computer or other receiving device via cable set 118 and plug 120. In this typical TEDID, the preferred folding sequence will be that 58 folds on 56 face to face, then ,while maintaining 58 and 56 faces attached, back of 56 folds onto back of 54, then while the 58,56,54 are kept in folded form, face of 54 folds onto face of 52, then 52 and 44 fold back to back,then 44 and 46 fold face to face,then46 and 48 fold back to back, then 48 and 50 fold face to face, then 50 and 42 fold back to back,then 42 and 40 folding face to face,then 40 and 38 folding back to back, then 38 and 36 folding face to face.

Some of the "flexible joints" may be "detachable", and corresponding "flexible cables" being " depluggable" , such that some of the Sub TEDIDs may be detached from the assembly,hence for many occasions only the most essential Sub TEDIDs are carried,or that they can be carried stacked on one another for further versatility.

Sub TEDIDs may be of different sizes, but should be such to enable folding if so desired. The size and shape of each Sub TEDID and their number is a matter of design and application .

In another version of the invension The TEDID whether in one piece or an assembly of Sub TEDID(s) may be made of "thin pressure sensitive electronic screen" also called "touchscreen" currently in use for a variety of applications. Such flat screens convert pressure(usually by finger) into variation in electric current or voltage that signals a "Symbol", Such screens can also be programmed to register desired pressure so that even a light touch can be registered or that touches less than some pressure level are ignored. They can be programmed to signal different symbols when different parts of the screen is touched. A map of which location to touch for each symbol can be electronically imposed on the screen. Such electronic map can be reprogrammed for various sets of symbols. For example it can be programmed to map English alphabet on the screen for one application and then reprogrammed to map Greek alphabet on the screen. In short, conversion of the touch screen TEDID mapping from one set of symbols to another set of symbols can be achieved by internal programming.

In our version of the invention that does not use "pressure sensitive screen technology", the TEDID can represent different symbol sets, for example one particular key can be L in English and ^ in Greek, but only a limited number of such different symbols can be demonstrated on or near the key for operator to know which key represents what symbol in different symbol sets. But in pressure sensitive screen technology can be utilized to change the face of each "symbol node" to show exactly what symbol it correctly represents.

In another version of the invention,the TEDID may be made of thin flexible material,such as rubber, on which the electronic circuit, made of flexible material such as flexible wiring or electro-conducting paint printed or imposed. Electronic circuit may be covered by a thin layer of flexible non-conducting material, leaving only the symbol nodes exposed. This kind of TEDID can be "Folded" or "Rolled", for transport and storage versatility and "Shaped" for further versatility. Also this flexible TEDID can be in more than one Sub TEDIDs that can be attached or detachable, as explained in the rigid version.

It would therefore be possible to have TEDID with many number of symbols that can be added on by just adding extra Sub TEDIDs, several such Sub TEDIDs can fold and roll or detach for transport. The rigid version of the TEDID,may be flat, concave, convex, or have any other shape that may suit some ergonomic or other purpose, but it should be remembered that some shapes and designs may reduce folding freedom.

The Flexible Joints may have limited opening angle such that when fully opened, theSub TEDIDs attached by such Flexible Joint will form the desired surface, such as a plane surface, even if not supported on a flat desk, and even if the assembly of several Sub TEDIDs forming the TEDID should be kept at an angle to the underlying surface or desk for ease of operation.

The TEDID may have folding or detachable supporting means such as legs to hold it at an angle to the underlying surface (or desk) for easier operation.

There may be "Rods" passing through grooves or loops on the sides or on the back of "Sub TEDID" to keep the TEDID assembly in the desired ,usually flat shape or at desired angle. There may be removable or fixed "Clasps" holding two adjacent Sub TEDIDs at a straight or desired angle to one another, even if the assembly of Sub TEDIDs is not supported by the underlying surface or desk,or it is desirable to keep the assembly at angle to the desk for ease of operation. Flexible Joints may be made of rigid material (such as most "hinges"), or made of flexible rubber like material , shaped for example like a "band" adhered or glued to the Sub TEDIDs, bridging their adjacent sides. However, such flexible bands may not easily hold Sub TEDIDs at straight or desired angles to one another, especially when the TEDID assembly is held away from or at an angle to the supporting surface.

To further reduce the overall thickness of the single piece TEDID, one method is to design the electronic circuit such that the thicker elements of the circuit are all in one or more corners or close to one or more sides, preferably serving some secondary function. For example, the housing of such thicker elements may serve to keep the TEDID at an angle to the desk for easier operation. Alternatively thicker elements may be placed where most suitable to what the TEDID is attached to, such as a portable computer. For multi-piece TEDIDs, such thicker elements of the circuit may be placed all preferably on one but otherwise more of the Sub TEDIDs such that as many Sub TEDIDs as possible are as thin as possible.

For many applications, the extra thickness of thicker Sub TEDIDs would better be rising above the operating face so that the underneath can rest flat on the working surface or desk, but various applications would call for different formations.

An alternative but similar way to reduce thickness of the TEDID is that, the electronic circuit is designed such that much or all of "bulkier" elements of the circuit are grouped together in one or more relatively thicker "Chips", electronically connected to the rest of the TEDID via flexible cables,preferably by one or more detachable plugs.

To reduce weight and costs and complexity, the flexible electronic cables connecting circuits between Sub TEDIDs can be made such to serve also as the flexible joints.

To provide more coherence between Sub TEDIDs, the underneath surface of all theSub TEDIDs may be adhered or stuck on a sheet made of flexible material such as rubber.

Another alternative is that the operating surface of all Sub TEDIDs are adhered or stuck to a sheet of flexible material,maintaining sufficient distance between adjacent Sub TEDIDs to allow folding, such sheet being open (if necessary) over symbol nodes .In the versions using pressure sensitive screens, the said overlaying sheet need not have openings at symbol nodes but to be able to transmit pressure to the symbol nodes and be such that symbol nodes are visible by the operator. Such thin flexible layer, whether at underneath or face surfaces will provide extra protection and coherence between Sub TEDIDs but would add slightly to the overall thickness and weight.

Some of the advantages of this invention are:
- It solves each one of the explained disadvantages of Prior art to a high degree, often completely.
- It can be lighter, smaller, portable, foldable, pocket size for transport, yet full size for use.
- It is cheaper to produce as keys, springs and housing are not necessary.
- It is cheaper to store before selling and courier when sold or for repair.

Some uses of this invention are:
- Thinner and lighter portable computer, when conventional keyboards are replaced by a one piece TEDID version of this invention.
- Pocket portable computers when foldable versions of this invention is used in conjunction with pocket size displays, printers , memory chips and processing chips.

In order to address the differences between this invention and relevant pnor art, some of the distinctive characteristics of this invention should be re-emphasized and regrouped. The unfoldable version of this invention has the following important features :
1) It is THIN, and can be made thinner than a fraction of a millimeter,
   Even bulkier elements may also be made of very thin elements or made detached from the body of the TEDID, or more importantly it could be made as a part of the receiving device such as the computer, rather than be part of the input device (TEDID), such that TEDID may be entirely THIN. This makes it very useful in reducing the bulk, thickness, weight and size of laptop or notebook computers and increase their versatility and sturdiness.
2)It is "TOUCH SENSITIVE" as compared to pressure sensitive.
   Pressure takes force and time to implement, meaning that pressure sensitive keyboards such as existing prior art computer keyboards and membrane or flexible film keyboards are slower and much more laborious. In particular, membrane keyboards and small existing palm top keyboards are very slow and tedious to work with.
   Touch sensitivity has been achieved by prior art either by using the computer screen as a keyboard with the serious disadvantage that sections of screen or the time that screen is used as keyboard it is not usable for its main function of acting as a computer screen A lesser degree of thinness has been achieved by pnor art in membrane or flexible film keyboards, but such prior art is very slow, laborious and tiring for fingers and membranes lose their flexibility after extensive use.
3) It is KEYLESS , which is not the same as touch sensitive Keys can be touch sensitive.
   Keys increase bulk and cost, reduce sturdiness and reliability, make folding impossible Even membrane keyboards have dome shaped keys made of flexible spring like film.
4) The technology utilized in achieving thin and touch sensitive features is what is labeled as "Exposed Circuit Technology" which is a circuit board exposed over certain symbol nodes touching of which nodes closes the circuit which signifies desired input.
   This technology as compared to "touchscreen" technology is
   (a) cheaper to manufacture
   (b) does not consume electricity or discharge the battery while not touched and
   (c) is better for some applications even if less desirable for some other applications,
5) It is versatile , accommodating several variations and options such as:
   a) to locate some or all the thicker elements of the circuit such as diodes, transistors, resistors,processors,capacitors, etc. to desired location
   b) to locate some or all the thicker elements to one or more external chip , detachable from the rest of the device , even eliminate the thicker elements from the device by placing it as part of the receiving device ,such as the computer
   c) to have convex, concave, flat or any desired planary.
   d) of a protective layer , utilizable for say labeling symbols to various alphabets
   e)detachable means or legs to hold the device at desired angle to operating desk
   f) to change its planary by manipulating clasps or hinges between sub-TEDDIES,

Foldable version of this invention utilizes Thin Electric Data Input Device (TEDID), divides it into sub-TEDIDs, that can be folded latitudinally, longitudinally or both. Each prior art differs form this invention in one, more or all above characteristics. This invention also incorporates a "method" of folding a "board" both latitudinally and longitudinally. Such " method" should be "invented" pnor to inventing a board that can be folded in both direction , and therefore it is an invention by itself and independent of the subdivided foldable board and also independent of TEDID.

The Rollable version of this invention utilizes the fact that a thin circuit is printed on or attached to a thin rubber like sheet of flexible material The notion of locating a circuit on a flexible sheet is novel , inventive and useful Conventionally circuits are printed on boards known as "circuit boards" "Circuit flexible sheet" is introduced here. Optimum version of the invention is identified for comparative analysis with prior art. The description so far has explained many variations of the invention so as not to iimit the scope of the invention.Although each of those variations are useful in certain circumstances, the version that the inventor believes is "optimal" is the following:
"A thin board on which only the gaps and connecting circuit is printed, but all of the bulkier element of the circuitry are part of the signal receiving device . Such circuit board can be subdivided into a number of sub-circuit boards that can be folded latitudinally longitudinally If a thin flexible sheet is used instead of a board , it can be rolled up or folded ".

Having reemphasized some of the distinctive features and the optimal version of this invention , it is easier to compare it with some prior arts.

International publication No. WO93/15518 ( PCT/DK93/00034), comprising a touch sensitive panel with a front panel with all the bulkier elements of the circuit at the reverse of the panel.
- It differs from the present invention in characteristics 1, 4, 5
- It is not foldable nor rollable.
- It is useful as control panel of industrial machinery but not for laptop or pocket computers.

UK Patent application GB 2279617, compnses a palmtop (pocket) computer with an attached flexible film keyboard that can be folded behind the computer when not in use,
- It differs in characteristics 1,2,3,4,5 absolutely or in various degrees.
- Its keyboard is limited in size to three times the area of the computer surface.
- Flexible film keyboards are not suited to being folded, as while folded, the flexible key "domes" are pressured down and hence stressed, leading to less flexibility over time.
- Flexible film or membrane keyboards require some gap between the upper membrane and the lower base, and therefore are not as thin as desirable for multiple foldability.

German patent DE - A - 2932540 consists of a liquid crystal display with a conductive plate cut out in certain sensor gratings. It differs from present invention in that:
- It focuses on creating a unique display on the LCD for each different sensor grating.
- It does not use Exposed Circuit Technology , characteristic 4 above.
- It requires-some extra layers, for LCD and others that increase thickness and reduce all the features of present invention achieved due to its supenor thinness.
- Characteristic 5 above.
- It is not foldable nor rollable.

Despite all the differences with the present invention, patent DE-A-2932540 utilizes the idea of the exposed cathode and anode, simultaneous touching of both brides the gap between them to output a signal. The published version of patent application DE-A-2932540, as supplied by European Patent Search is extremely brief. For English users, it is further diluted by translation. Based on what can be understood from translated published material, it may not function, as cathodes and anodes are imposed on or attached to a conductive plate or layer, which should result in permanent bridging of cathodes and anodes. To the extent that similarities exist between DE-A-2932540 and the present invention, such known prior art will be treated in claims as prior art and is the preamble to the main claim.

Main changes or improvements to prior art may be summarized as follows:

In contrast to DE-A-2932540, which uses a conductive plate or layer, present invention circuit is imposed on a non-conductive rigid (or in one version a flexible) sheet. As compared to conventional electronic keys and keyboards, the improvements or changes are that symbol nodes on the printed circuit are exposed,

As compared to both conventional keyboards and DE-A-2932540, the improvements are:
1) being made over a thin board, which is not a requirement of above prior arts,
2) being made of thin electronic elements which is not a requirement of above prior arts,
3) some or all of the elements which are thicker than desired are concentrated on a separate chip which is fixed to or detached or detachable from the thin board.
4) overall it is as thin as is technically possible yet economically and aesthetically desirable, which according to current technology may be less than one millimeter, and in any case less than ten millimeters thick.

¹ [Translator's Note: die Abkürzung "TEDID" steht für "Thin Electronic Data Input Device", was als "Dünnes Elektronisches Dateneingabegerät" übersetzt wird.]

## Claims

1. A thin electronic data input device(10) comprising:
An electronic data input circuit(14), with one or more symbol nodes(22,24), each symbol node comprising a cathode and an anode separated by a gap(26, 28), such that an operator's finger touch can bridge the gap causing a current;
Said circuit board having all its symbol nodes exposed such that each symbol node's cathode and anode can be touched simultaneously by an operator's finger;
Said circuit being designed to output a unique signal for each symbol node touched;
Said circuit and symbol node(s), being printed on or firmly attached to a rigid board(12);
Characterized by:
Said rigid board being thin and non electro-conductive so as to be suitable as a supporting base for an electronic printed circuit;
Said electronic data input circuit having some or all of its thicker elements that exceed desired thickness concentrated on one or more thicker elements chip(s)(114) so as to reduce the thickness of the rest of the circuit board;
Said thicker elements chip(s) being either attached to the rest of the circuit by fixed or detachable plugs(116), or being incorporated into the computer or other machine for which the thin electronic data input device is being used;
Said circuit board is made of thin elements, such that said thin electronic data input device is thinner than ten millimeters except for thicker elements chip(s);
Said device utilizing what is herein referred to as Exposed (Printed) Circuit Technology.

2. A Thin Electronic Data Input Device (34) , according to claim (1),
comprising a rigid board with connected sub-parts in order to be foldable ,
using Thin Touchscreen Technology or Exposed (Printed) Circuit Technology , both referred to here as TEDID , such that the TEDID is overall thinner than few millimeters,
characterized by ;
said TEDID being segregated , into a desired number of sub-TEDIDs (36),
each sub-TEDID connected to at least one adjacent sub-TEDID,
by one or more Flexible Joints such as Hinges ;
which segment of the electronic circuit on each sub-TEDID is connected to the electronic circuit on adjacent sub-TEDID or sub-TEDIDs by flexible electronic cables (96);
which cables may also serve as Flexible Joints between sub-TEDIDs;
whereby electronic circuit connections and Flexible Joints connecting any two sub-TEDIDs are via the same side of said two sub-TEDIDs;
and whereby the electronic circuit of the assembly of all sub-TEDIDs functions electronically same as that of a unified Thin Electronic Data Input Device;
yet the total assembly can be folded along several common sides of said sub-TEDIDs, each folding being from zero to 360 degrees as desired, and in the desired direction .

3. A Thin Electronic Data Input Device (34) ,according to claim 2 ,comprising a rigid board with connected sub-parts in order to be foldable , hereby referred to as TEDID , characterized by, all sub-TEDIDs (36) being flat, rectangular and of equal size ,arranged in one or more rows such that the adjacent sides of each two sub-TEDIDs are of equal length , parallel to one another , meeting end to end, whereby electrical connections (96)and physical connections (60) between each two sub-TEDIDs allow for at least 180 degrees folding in the desired direction, whereby each sub-TEDID on each row is connected to adjacent sub-TEDID or sub-TEDIDs of the same row , but sub-TEDIDs on different rows are not directly connected to any sub-TEDID on any other row except for either the utmost right sub-TEDID (52) or the or utmost left sub-TEDID (42) on each row, but not both, which is connected to , respectively, the utmost right or utmost left sub-TEDID on either the next upper or lower row (124) , but not both rows , and where all electronic connection(s) to external Thicker Elements Chip(s) (114) is via one or more of the sub-TEDIDs (42) located at top or bottom row or extreme right or left of other rows or preferably extreme right or left of top or bottom row , preferably one of the sub-TEDIDs which is connected to only one adjacent sub-TEDID , and that such electronic connection(s) or connection(s) to Thicker Elements Chip(s) is via such side of a suitable said sub-TEDID that when the assembly is unfolded and stretched on a flat surface, such side is neither adjacent nor connected to another sub-TEDID , i.e. the side(s) of perimeter sub-TEDIDs (42) located on the perimeter of the total assembly , whereby the assembly of such connected sub-TEDIDs can be folded several times into a folded assembly with a base the size of one sub-TEDID and the height equal to all sub-TEDIDs lying on top of one another .

4. A METHOD of folding a Thin Electronic Data Input Device, according to claim 3, comprising a rigid board with connected sub-parts to be foldable , referred to here as TEDID , whereby each two sub-TEDIDs which are both connected and adjacent to each other are folded along the connected side to lie on each other , either face to face , provided faces of both such sub-TEDID are not already folded onto some third sub-TEDID , or back to back provided backs of such sub-TEDIDs are not already folded onto some third sub-TEDID, manipulating said steps over all sub-TEDIDs until every two sub-TEDIDs which are both connected and adjacent to one another are folded onto one another, either face to face or back to back ;
said folding sequence , preferably starting by folding the extreme left sub-TEDID (58) or right sub-TEDID on lowest row which is connected to only one other sub-TEDID , and folding it onto the latter sub-TEDID (56) , and then folding the unfolded upon face of said latter sub-TEDID (56) onto the next unfolded upon sub-TEDID (54) , progressing towards the sub-TEDID on the lowest row which is connected to the next row (52) , folding it onto the sub-TEDID connected to it on the next upper row (44) , then progressing to the next unfolded sub-TEDID (46) , until all sub-TEDIDs lie on top of each other .

5. A Thin Electronic Data Input Device , according to claim 3 , comprising a rigid board with connected sub-parts in order to be foldable , where different sub-TEDIDs may be of different sizes and shapes, but such that desired foldability is not sacrificed.

6. A Thin Electronic Data Input Device , according to claims 2 , 3 or 5, comprising a rigid board with connected sub-parts to be foldable,
where Joints between sub-TEDIDs are DETACHABLE and electronic connections between sub-TEDIDs are DEPLUGABLE where desired , so that some sub-TEDID(s) can be removed ,
and whereby the electronic circuit has the design such that removal of some sub-TEDID(s) results in partial but not total elimination of functionality of the remaining circuit .

7. A Thin Electronic Data Input Device, according to claims 2 , 3 , 5 or 6 , comprising a rigid board with connected sub-parts to be foldable ,
whereby sub-TEDIDs can be fixed at desired angles to adjacent sub-TEDID(s), using suitable means such as flexible joints between sub-TEDIDs being LOCKABLE at desired angles or Clasps that keep two or more sub-TEDIDs at desired angles or Rods that run through two or more sub-TEDIDs via Holes or Grooves or Tunnels embodied in such sub-TEDIDS .

8. A thin electronic data input device as in claim (1), characterized by: its electronic data input circuit including all symbol node(s) printed on or firmly attached to a thin soft flexible rubber-like sheet, instead of a rigid board, and its electronic data input circuitry including cathodes and anodes being made of flexible material or electro-conductive paint, whereby said thin electronic data input device may be rolled or folded.

9. A thin electronic data input device, according to claims 2 , 3 , 5 or 6, comprising a rigid board with connected sub-parts to be foldable,
whereby the underneath or top faces of some or all of the sub-TEDIDs are adhered , detachably or firmly , to a thin flexible sheet , serving also as flexible joints , allowing folding of sub-TEDIDs , along their common sides ;
such sheet having openings over exposed circuit Symbols Nodes to make them touchable ;
or such sheet being transparent and pressure transmitting when covering touchscreen or pressure sensitive symbol nodes stipulated in some versions of this invention.

10. A thin electronic data input device as in claims 1, 2, 3, 5, 6, 7, 8, characterized by: said device having a fixed or removable and replaceable non electro-conductive layer over all or part(s) ofthe circuit, with opening(s) (18,20) to expose the symbol node(s).

## Patentansprüche

1. Ein dünnes elektronisches Dateneingabegerät (10), welches folgendes enthält:
Einen elektronischen Dateneingabeschaltkreis (14), mit einem oder mehreren Symbolknoten (22, 24), wobei jeder Symbolknoten eine Kathode und Anode enthält, zwischen denen jeweils ein Abstand (26, 28) besteht, der so groß ist, daß der Bediener den Abstand mit einer Fingerberührung überbrücken und einen Stromfluß verursachen kann;
Wobei alle Symbolknoten der besagten Leiterplatte freiliegen, so daß die Kathode und Anode jedes Symbolknotens gleichzeitig von dem Finger des Bedieners berührt werden können;
Wobei der besagte Schaltkreis so konstruiert ist, daß er für jeden Symbolknoten, der berührt wird, ein einzigartes Signal ausgibt;
Wobei der besagte Schaltkreis und der (die) Symbolknoten auf eine starre Platte (12) gedruckt oder fest an ihr angebracht sind;
Das dadurch gekennzeichnet ist, daß:
Die besagte starre Platte dünn und elektrisch nicht leitfähig ist, so daß sie als Stützfläche für einen elektronischen, gedruckten Schaltkreis dienen kann;
Einige oder alle dickeren Elemente des besagten Dateneingabeschaltkreises, die die gewünschte Dicke überschreiten, auf einem Elemente-Chip oder mehreren Elemente-Chips (114) konzentriert sind, um die Dicke der restlichen Leiterplatte zu reduzieren;
Das (die) besagte(n) dickere(n) Elemente-Chip(s) entweder mittels fester oder abnehmbarer Stopfen (116) an den Rest des Schaltkreises befestigt, oder in den Computer oder die Maschine, für welche das dünne elektronische Dateneingabegerät benutzt wird, eingebaut ist (sind);
Die besagte Leiterplatte aus dünnen Elementen besteht, so daß das besagte elektronische Dateneingabegerät dünner als zehn Millimeter ist, mit Ausnahme des (der) dickeren Elemente-Chips;
Das besagte Gerät eine Technologie benutzt, die hierin *Exposed (Printed) Circuit Technology* [Freigelegte (Gedruckte) Schaltkreistechnologie] genannt wird.

2. Ein Dünnes Elektronisches Dateneingabegerät (34) gemäß Anspruch (1), welches eine starre Platte mit verbundenen Sub-Teilen zum Zusammenfalten enthält und entweder *Thin Touchscreen Technology* [Dünnsensorbildschirm-Technologie] oder *Exposed (Printed) Circuit Technology* [Freigelegte (Gedruckte) Schaltkreistechnologie] benutzt, und in beiden Fällen mit TEDID¹ bezeichnet wird, wobei das TEDID insgesamt dünner als ein paar Millimeter und dadurch gekennzeichnet ist, daß:
das besagte TEDID in eine gewünschte Anzahl von Sub-TEDIDs (36) unterteilt ist, wobei jedes Sub-TEDID durch Flexible Gelenke, wie z.B. Drehgelenke, mit mindestens einem Sub-TEDID verbunden ist;
wobei das Segment des elektronischen Schaltkreises aufjedem Sub-TEDID mit dem elektronischen Schaltkreis des bzw. der benachbarten Sub-TEDIDs durch flexible elektronische Kabel (96) verbunden ist;
wobei die Kabel auch als Flexible Gelenke zwischen den Sub-TEDIDs dienen können; wobei die elektronischen Schaltkreisverbindungen und Flexiblen Gelenke, die zwei beliebige Sub-TEDIDs verbinden, über dieselbe Seite der besagten zwei Sub-TEDIDs verlaufen;
und wobei der elektronische Schaltkreis aller zusammengebauter Sub-TEDIDs elektronisch genauso funktioniert wie der eines einheitlichen Dünnen Elektronischen Dateneingabegerätes;
die gesamte Baugruppe dennoch entlang verschiedener gemeinsamer Seiten der besagten Sub-TEDIDs zusammengefaltet werden kann, wobei jede Faltung zwischen null und 360 Grad betragen und in die gewünschte Richtung erfolgen kann.

3. Ein Dünnes Elektronisches Dateneingabegerät (34), gemäß Anspruch 2, welches eine starre Platte mit verbundenen Sub-Teilen zum Zusammenfalten enthält, das hierin als TEDID bezeichnet wird, und dadurch gekennzeichnet ist, daß alle Sub-TEDIDs (36) flach, rechteckig, gleich groß und in einer oder mehreren Reihen angeordnet sind, so daß die benachbarten Seiten aller zwei Sub-TEDIDs gleich lang sind, parallel zueinander verlaufen, und ihre Enden jeweils zusammentreffen, wobei die elektrischen Verbindungen (96) und die physikalischen Verbindungen (60) zwischen allen zwei Sub-TEDIDs eine Faltung von mindestens 180 Grad in die gewünschte Richtung ermöglichen, wobei jedes Sub-TEDID in jeder Reihe mit dem bzw. den benachbarten Sub-TEDID(s) derselben Reihe verbunden ist, die Sub-TEDIDs der anderen Reihen jedoch nicht direkt mit irgendwelchen Sub-TEDIDs in irgendwelchen anderen Reihen verbunden sind, mit Ausnahme entweder des äußerst rechten Sub-TEDIDs (52) oder des äußerst linken Sub-TEDIDs (42) in jeder Reihe, aber nicht beiden, welches mit dem äußerst rechten bzw. dem äußerst linken Sub-TEDID der nächsten oberen oder der der nächsten unteren Reihe (124), aber nicht beider Reihen, verbunden ist, und wo die (alle) elektronische(n) Verbindung(en) zu einem (mehreren) externen Dicken Elemente-Chip(s) (114) über ein Sub-TEDID oder mehrere Sub-TEDIDs (42) läuft, das bzw. die sich an der obersten oder untersten Reihe oder der äußerst rechten oder linken Seite von anderen Reihen oder vorzugsweise äußerst rechts oder links von der obersten oder untersten Reihe befindet, vorzugsweise eines der Sub-TEDIDs, das nur mit einem benachbarten Sub-TEDID verbunden ist, und, daß diese elektronische(n) Verbindung(en) zu dem (den) Dickeren Elemente-Chip(s) über solch eine Seite eines solchen geeigneten Sub-TEDIDs verläuft, daß, wenn die Baugruppe auseinandergefaltet und auf einer flachen Oberfläche ausgestreckt wird, diese Seite weder neben einem anderen Sub-TEDID liegt noch mit einem anderen Sub-TEDID verbunden ist, d. h. die Seite(n) der Umfang-Sub-TEDIDs (42), die sich auf dem Umfang der gesamten Baugruppe befinden, wobei die Baugruppe dieser verbundenen Sub-TEDIDs mehrere Male zu einer zusammengefalteten Baugruppe zusammengefaltet werden kann, wobei die Grundfläche so groß ist wie eine der Sub-TEDIDs, und die Höhe so hoch wie alle aufeinanderliegenden Sub-TEDIDs.

4. Eine METHODE zum Falten eines Dünnen Elektronischen Dateneingabegerätes, gemäß Anspruch 3, welches eine starre Platte mit verbundenen Sub-Teilen zum Zusammenfalten enthält und hierin hierin als TEDID bezeichnet wird, wobei alle zwei Sub-TEDIDs, die sowohl verbunden als auch benachbart sind, entlang der Seite an welcher sie verbunden sind gefaltet werden, so daß sie aufeinanderliegen, entweder Oberseite auf Oberseite, vorausgesetzt die Oberseiten dieser beiden Sub-TEDIDs sind nicht schon auf irgendein drittes Sub-TEDID gefaltet worden, oder Unterseite auf Unterseite, vorausgesetzt, die Unterseiten dieser Sub-TEDIDs sind nicht schon auf irgendein drittes Sub-TEDID gefaltet worden, wobei die besagten Schritte für alle Sub-TEDlDs ausgeführt werden, bis alle Sub-TEDID-Paare, die sowohl verbunden als auch benachbart sind, aufeinandergefaltet sind, und zwar entweder Oberseite auf Oberseite, oder Unterseite auf Unterseite;
wobei die besagte Faltesequenz vorzugsweise mit dem Falten des äußerst linken Sub-TEDIDs (58) oder rechten Sub-TEDIDs in der untersten Reihe, welches nur mit einem anderen Sub-TEDID verbunden ist, beginnt, und dieses auf das letztere Sub-TEDID (56) gefaltet wird, und danach die Seite des besagten letzteren Sub-TEDIDs (56), auf die noch nicht gefaltet worden ist, auf das nächste Sub-TEDID (54), auf das noch nicht gefaltet worden ist. gefaltet wird, und immer so weiter bis zum Sub-TEDID in der untersten Reihe welches mit der nächsten Reihe (52) verbunden ist, welches auf das mit ihm verbundene Sub-TEDID in der nächsten oberen Reihe (44) gefaltet wird, und dann immer so weiter bis zum nächsten Sub-TEDID (46), bis alle Sub-TEDIDs aufeinanderliegen.

5. Ein Dünnes Elektronisches Dateneingabegerät, gemäß Anspruch 3, welches eine starre Platte mit verbundenen Sub-Teilen zum Zusammenfalten enthält, wobei die verschiedenen Sub-TEDIDs unterschiedlicher Größe und Form sein können, aber nur so, daß die gewünschte Faltbarkeit nicht geopfert wird.

6. Ein Dünnes Elektronisches Dateneingabegerät, gemäß Anspruch 2, 3 oder 5, welches eine starre Platte mit verbundenen Sub-Teilen zum Zusammenfalten enthält, wobei die Gelenke zwischen den Sub-TEDIDs ENTFERNBAR und die elektronischen Verbindungen zwischen den Sub-TEDIDs HERAUSNEHMBAR sind, um, wo es erwünscht ist, das Entfernen einiger Sub-TEDIDs zu ermöglichen, und wobei der elektronische Schaltkreis so konstruiert ist, daß das Entfernen eines oder mehrerer Sub-TEDIDs zu einer teilweisen aber nicht völligen Beseitigung der Funktionalität des restlichen Schaltkreises führt.

7. Ein Dünnes Elektronisches Dateneingabegerät, gemäß Anspruch 2, 3, 5 oder 6, welches eine starre Platte mit verbundenen Sub-Teilen zum Zusammenfalten enthält, wobei Sub-TEDIDs zu einem gewünschten Winkel an das (die) benachbarte(n) Sub-TEDID(s) befestigt werden können, mit Hilfe geeigneter Mittel wie flexiblen Gelenken zwischen Sub-TEDIDs, die auf einen gewünschten Winkel FESTSTELLBAR sind, oder Klemmen, die zwei oder mehr Sub-TEDIDs in einem gewünschten Winkel zueinander halten. oder Stangen, die über in solche Sub-TEDIDs integrierte Löcher, Rillen oder Tunnel, durch zwei oder mehr Sub-TEDIDs laufen.

8. Ein Dünnes Elektronisches Dateneingabegerät wie in Anspruch (1), welches dadurch gekennzeichnet ist, daß: sein elektronischer Dateneingabeschaltkreis, einschließlich des Symbolknotens bzw. aller Symbolknoten, auf eine dünne, weiche, flexible, gummiähnliche Folie gedruckt oder fest angebracht ist, anstatt auf eine starre Platte, und, daß seine elektronische Dateneingabeschaltung, einschließlich Kathoden und Anoden, aus flexiblem Material oder elektrisch leitfähigem Lack besteht, wodurch das besagte elektronische Dateneingabegerät gerollt oder gefaltet werden kann.

9. Ein Dünnes Elektronisches Dateneingabegerät, gemäß Anspruch 2, 3, 5 oder 6, welches eine starre Platte mit verbundenen Sub-Teilen zum Zusammenfalten enthält, wobei die Ober- oder Unterseiten einiger oder aller Sub-TEDIDs entfembar oder fest an ein dünne, flexible Folie angebracht sind, welches ebenso als flexibles Gelenk dient und das Falten der Sub-TEDIDs entlang ihrer gemeinsamen Seiten ermöglicht; wobei diese Folie Öffnungen über den freiliegenden Schaltkreis-Symbolknoten besitzt, damit diese berührt werden können; oder wobei diese Folie transparent und druckdurchlässig ist, wenn sie Sensorbildschirm- oder druckempfindliche Symbolknoten abdeckt, wie es in einigen Ausführungen dieser Erfindung festgelegt wird.

10. Ein Dünnes Elektronisches Dateneingabegerät wie in Anspruch 1, 2, 3, 5, 6, 7, 8, dadurch gekennzeichnet, daß: das besagte Gerät über dem gesamten Schaltkreis oder einem Teil bzw. Teilen des Schaltkreises eine fest angebrachte, oder entfernbare und ersetzbare, elektrisch nicht leitfähige Schicht besitzt, mit Öffnung(en) (18, 20) um den (die) Symbolknoten freizulegen.

## Revendications

1. Dispositif d'entrée de données électronique mince (10) comprenant :
un circuit d'entrée de données électronique (14) ayant un ou plusieurs noeuds symboliques (22, 24), chaque noeud symbolique comprenant une cathode et une anode séparées par un espace (26, 28) permettant à un opérateur de les toucher à l'aide d'un doigt, ce qui produit un courant;
tous les noeuds symboliques de ladite plaquette de circuit étant exposés de façon que la cathode et l'anode de chaque noeud symbolique puissent être touchées simultanément par le doigt de l'opérateur ;
ledit circuit étant conçu pour produire un signal unique pour chaque noeud symbolique touché ;
lesdits circuits et noeuds symboliques étant imprimés sur une plaquette rigide (12) ou fermement attachés à celle-ci.
Caractéristiques :
Ladite plaquette rigide est mince et non-conductrice de façon à pouvoir être utilisée comme support de circuit électronique imprimé ;
ledit circuit d'entrée de données électronique est fabriqué de façon que certains ou que l'ensemble de ses éléments plus épais dépassant l'épaisseur désirée soient concentrés sur une ou plusieurs puces d'élément plus épaisses (114) afin de réduire l'épaisseur du reste de la plaquette de circuit ;
lesdites puces d'élément plus épaisses sont fixées au reste du circuit à l'aide de fiches fixes ou amovibles (116) ou sont incorporées à l'ordinateur ou à un autre appareil dans lequel le dispositif d'entrée de données électronique est utilisé ;
ladite plaquette de circuit est fabriquée à l'aide d'éléments minces de façon que l'épaisseur dudit dispositif d'entrée de données électronique mince soit inférieure à dix millimètres, à l'exception des puces d'élément plus épaisses ;
ledit dispositif utilise la technologie de circuits exposés (imprimés), nom qu'on lui donne dans les présentes.

2. Un dispositif d'entrée de données électronique mince (34), conformément à l'assertion 1, comprend une plaquette rigide ayant des sous-parties branchées afin d'être repliable et utilise la technologie d'écran tactile mince ou la technologie de circuits exposés (imprimés), toutes deux appelées TEDID dans les présentes, de façon que l'épaisseur globale du TEDID soit inférieure à quelques millimètres.
Caractéristiques :
Ledit TEDID est séparé en un nombre désiré de sous-TEDID (36),
et chaque sous-TEDID est branché à au moins un sous-TEDID adjacent à l'aide d'un ou de plusieurs joints flexibles comme des charnières,
et ce segment du circuit électronique de chaque sous-TEDID est branché au circuit électronique du ou des sous-TEDID adjacents par des fils électroniques flexibles (96) ;
ces fils peuvent également servir de joints flexibles entre les sous-TEDID, au moyen desquels les branchements de circuit électronique et les joints flexibles branchant deux sous-TEDID sont effectués par le même côté de ces deux sous-TEDID,
au moyen desquels les branchements de circuit électronique de l'assemblage des fonctions de tous les sous-TEDID fonctionnent de la même façon électronique qu'un dispositif d'entrée de données électronique mince unifié ; pourtant, l'assemblage total peut être plié le long de plusieurs côtés communs desdits sous-TEDID, chaque pli ayant un angle de zéro à 360, au besoin, et le sens désiré.

3. Un dispositif d'entrée de données électronique mince (34), conformément à l'assertion 2, comprenant une plaquette rigide ayant des sous-parties branchées afin d'être repliable, nommé TEDID dans les présentes, est caractérisé par la forme plate et rectangulaire, ainsi que la taille égale de tous les sous-TEDID (36), lesquels sont disposés en une ou plusieurs rangées de façon que les côtés adjacents de chaque paire de sous-TEDID soient de longueur égale, parallèles et en contact aux extrémités, afin que les branchements électriques (96) et les branchements physiques (60) entre chaque paire de sous-TEDID permettent le pliage sur au moins 180 degrés dans la direction désirée et afin que chaque sous-TEDID de chaque rangée soit branché au sous-TEDID ou aux sous-TEDID adjacents de la même rangée, sans que les sous-TEDID des autres rangées ne soient branchés directement aux sous-TEDID d'une autre rangée, à l'exception du sous-TEDID situé le plus à droite (52) ou du sous-TEDID situé le plus à gauche (42) sur chaque rangée (un seul des deux), qui sont branchés respectivement au sous-TEDID situé le plus à droite ou au sous-TEDID situé le plus à gauche sur la rangée supérieure ou inférieure (124) suivante (une seule rangée), et dont tous les branchements électroniques aux puces d'élément plus épaisses (114) sont effectués par l'entremise d'un ou de plusieurs sous-TEDID (42) situés sur la rangée du haut ou du bas, ou à l'extrême droite ou à l'extrême gauche des autres rangées, ou préférablement à l'extrême droite ou à l'extrême gauche de la rangée du haut ou du bas, préférablement de l'un des sous-TEDID qui est branché à un seul sous-TEDID adjacent, et ces branchements électroniques ou ces branchements aux puces d'élément plus épaisses sont effectués par l'entremise dudit sous-TEDID convenable de façon qu'au dépliage de l'assemblage sur une surface plane, ce côté ne soit ni adjacent ni branché à un autre sous-TEDID, c'est-à-dire que les côtés des sous-TEDID périmétriques (42) situés sur le périmètre de l'assemblage total au moyen desquels l'assemblage de ces sous-TEDID branchés peut être plié plusieurs fois en un assemblage plié dont la base est de dimensions égales à celles d'un sous-TEDID et dont la hauteur est égale à la hauteur totale de tous les sous-TEDID reposant les uns sur les autres.

4. MÉTHODE de pliage d'un dispositif d'entrée de données électronique mince, conforme à l'assertion 3, comprenant une plaquette rigide ayant des sous-parties branchées afin d'être repliable, nommé TEDID dans les présentes, au moyen desquelles chaque paire de sous-TEDID branchés et adjacents est pliée en deux le long du côté branché de façon que l'un repose sur l'autre face à face, pourvu que la face de ces sous-TEDID ne repose pas déjà sur un troisième sous-TEDID, ou dos à dos, pourvu que le dos de ces sous-TEDID ne repose pas déjà sur un troisième sous-TEDID, en effectuant lesdites étapes pour tous les sous-TEDID jusqu'à ce que toutes les paires de sous-TEDID branchés et adjacents sont repliées face à face ou dos à dos ;
la séquence de pliage débute préférablement par le pliage du sous-TEDID de l'extrême gauche (58) ou du sous-TEDID de l'extrême droite qui est situé sur la rangée inférieure et qui est branché à un seul sous-TEDID, qui doit être plié sur l'autre sous-TEDID (56) ; ensuite, il faut replier la face non repliée dudit dernier sous-TEDID (56) sur le sous-TEDID non replié suivant (54), et procéder vers le sous-TEDID de la rangée inférieure qui est branché à la rangée suivante (52), et le replier sur le sous-TEDID auquel il est branché sur la rangée supérieure suivante (44), et procéder vers le sous-TEDID non replié suivant (46) jusqu'à ce que tous les sous-TEDID reposent les uns sur les autres.

5. Un dispositif d'entrée de données électronique mince, conformément à l'assertion 3, qui comprend une plaquette rigide ayant des sous-parties branchées afin d'être repliable, a des différents sous-TEDID qui peuvent avoir une taille et une forme différentes sans abandon du caractère repliable désiré.

6. Un dispositif d'entrée de données électronique mince, conformément à l'assertion 2, 3 ou 5, qui comprend une plaquette rigide ayant des sous-parties branchées afin d'être repliable, a des joints DÉTACHABLES entre les sous-TEDID et des branchements électroniques pouvant être DÉBRANCHÉS entre les sous-TEDID aux endroits désirés de façon que certains sous-TEDID puissent être retirés, et dont le circuit électronique est conçu afin de retirer certains sous-TEDID sans éliminer totalement la fonctionnalité du circuit restant.

7. Un dispositif d'entrée de données électronique mince, conformément à l'assertion 2, 3, 5 ou 6, qui comprend une plaquette rigide ayant des sous-parties branchées afin d'être repliable, a des sous-TEDID pouvant être fixés à un angle désiré à des sous-TEDID adjacents par des moyens convenables comme les joints flexibles entre les sous-TEDID qui PEUVENT ÊTRE VERROUILLÉS à l'angle désiré, comme les crochets qui fixent deux ou plusieurs sous-TEDID à un angle désiré, ou comme les tiges qui passent à travers deux ou plusieurs sous-TEDID dans des trous, des rainures ou des passages intégrés à ces sous-TEDID.

8. Un dispositif d'entrée de données électronique mince, tel qu'il est décrit à l'assertion 1, caractérisé par un circuit d'entrée de données électronique dont tous les noeuds symboliques sont imprimés ou fixés fermement sur une feuille mince, molle et flexible semblable à du caoutchouc, au lieu d'une plaque rigide, et dont les circuits d'entrée de données électroniques comprenant les cathodes et les anodes sont fabriqués à partir d'un matériau flexible ou de peinture conductrice, au moyen desquels un dispositif d'entrée de données électronique mince peut être roulé ou plié.

9. Un dispositif d'entrée de données électronique mince, conformément à l'assertion 2, 3, 5 ou 6, qui comprend une plaquette rigide ayant des sous-parties branchées afin d'être repliable, dont la partie inférieure ou supérieure de certains ou de l'ensemble des sous-TEDID est collée, de façon amovible ou non, à une feuille mince flexible qui sert également de joint flexible permettant de replier les sous-TEDID le long de leur côté adjacent ;
cette feuille comporte des ouvertures au-dessus des noeuds symboliques de circuit exposé afin qu'on puisse les toucher, ou cette feuille est transparente et transmet la pression lorsqu'elle couvre l'écran tactile ou les noeuds symboliques sensibles à la pression tel qu'il est stipulé dans certaines versions de la présente invention.

10. Un dispositif d'entrée de données électronique mince, conformément à l'assertion 1, 2, 3, 5, 6, 7 ou 8, caractérisé par un revêtement non-conducteur amovible et remplaçable ou fixe couvrant le circuit en tout ou en partie et comportant des ouvertures (18, 20) exposant les noeuds symboliques.
